# EUROPEAN PATENT SPECIFICATION

(11) **EP 1 380 402 B1**
(45) Date of publication and mention of the grant of the patent: **19.10.2005**
(21) Application number: 03101506.8
(22) Date of filing: 09.12.1999
(51) Int. Cl.: B29C 47/06, B05D 5/06, B05D 7/00, B05D 7/20, B29C 47/02, C23C 28/00, C23C 2/26, B32B 15/02, B32B 15/08

(54) **Steel wire with bright looking surface**
Stahldraht mit glänzender Oberfläche
Fil d'acier à surface d'aspect poli

(30) Priority: 15.12.1998 EP 98204259
(43) Date of publication of application: 14.01.2004
(62) Divisional of application: 99958182.0
(73) Proprietor: N.V. BEKAERT S.A., 8550 Zwevegem (BE)
(72) Inventor: ADRIAENSEN, Ludo, 8540 Deerlijk (BE); LEPLAE, Alain, 8560 Moorsele (BE); VAN LOO, Gilbert, 8530 Harelbeke (BE); VANDEWALLE, Gerard, 8540 Deerlijk (BE)
(74) Representative: Messely, Marc

(56) References cited:
- EP-A- 0 791 453
- DE-A- 19 625 548
- GB-A- 2 077 762
- US-A- 3 829 545
- US-A- 4 358 887
- US-A- 4 774 105

## Description

This is a divisional patent application of European patent application 99 958182.0.

### Field of the invention.

The present invention relates to a coated steel wire having a bright looking surface and to a method of manufacturing a coated steel wire having a bright looking surface.

### Background of the invention.

A number of attempts have already been made to give to a steel wire a bright looking surface and to maintain an acceptable level of brightness during the life of the wire. All of these attempts, however, have some major disadvantages.

One of these attempts has consisted in galvanizing a steel wire and enameling the galvanized steel wire so that a lacquered wire is obtained. Such a lacquered wire has the advantage of having an excellent corrosion resistance due to the duplex layer "zinc + lacquer" and the advantage of offering a variety of colors. Experience, however, has shown that for applications where the wire is subjected to high mechanical deformations, the lacquer does not stick on the surface of the wire due to its inherent lack of tenacity.
Still another problem is the relatively high coefficient of friction of lacquer coatings. This considerably slows down the speed of the downstream processing of the lacquered steel wire.

US-A-4 358 887 discloses a pipe, hot dipped with zinc and plastic coated with polyester. Between the zinc coating and the polyester coating is a chromate coating.

EP-A-0 791 453 discloses a galvanized strip. On the zinc coating is a bonding layer and on the bonding layer is a polymer coating such as a polyester coating with a dye.

### Summary of the invention.

It is an object of the present invention to provide a corrosion resistant steel wire with a bright, preferably colored surface.
It is another object of the present invention to provide a steel wire with a typical metallic looking color.
It is also an object of the present invention to provide a steel wire with transparent colored coating which conserves its transparency.
It is still another object of the present invention to provide an adherent coating to a bright steel wire without much decreasing the original degree of brightness of the steel wire.
It is yet another object of the present invention to provide an environment friendly method of giving a bright metallic looking color to a steel wire.

According to a first aspect of the present invention, there is provided a steel wire with a bright looking surface. The steel wire is covered with an intermediate coating layer which gives the brightness to the steel wire and is further immediately coated with a thermoplastic polyester. This polyester is transparent.

In comparison with a lacquer coating, these transparent polyesters are more tenacious and have a lower coefficient of friction. A friction force test demonstrates that a nylon coating or a polyethylene terephtalate coating provides a friction resistance which is three times smaller than the friction resistance of a zinc coating.

Preferably the coating is a thermoplastic polyester such as polyethylene terephthalate ("PET"), polybutylene terephthalate ("PBT") and polyethylene naphthenate ("PEN").
The most preferable embodiment amongst these is polyethylene terephthalate, since it combines the better properties such as high tenacity, low humidity absorption with a relatively low cost.

Within the context of the present invention, the terms "polyethylene terephthalate" or "PET" denote not only homopolymers of ethylene therephthalate but also copolymers of ethylene terephthalate containing not more than 20% of other copolymerized units, e.g. derived from other acids than terephthalic acid, such as isophthalic acid or from other glycols than ethylene glycol. The polymer may also contain mixtures of polymers in order to modify certain of the properties thereof.

The polyethylene terephthalate coating is more than 50% amorphous, and preferably more than 70% amorphous. This may be achieved by rapid cooling after the extrusion process. In comparison with a crystalline structure of the coating, an amorphous polyethylene terephthalate coating, for example, has a more pronounced luster and is more flexible. Recrystallisation, however, may occur in course of time. In comparison with a PBT coating, recrystallisation happens much slower with a polyethylene terephthalate coating. This is an advantage for a polyethylene terephthalate coating over PBT coating.

In comparison with coatings of polyamides such as nylon-6 (PA6), a polyethylene terephthalate coating has a better adhesion and adhesion retention, has a higher corrosion resistance, has a better resistance against ultra-violet light (= better weatherability) and has a lower absorption of water or moisture, and, as a consequence, maintains much better its original degree of transparency and luster. More particularly, polyethylene terephthalate coating absorbs only one tenth of the amount of moisture absorbed by a nylon-6 coating in the same circumstances. Moreover, application of a polyethylene terephthalate coating can be done in an environment-friendly way, i.e. with a much more simpler pre-treatment without the use of chromic acids which would otherwise decrease the degree of brightness and without the use of primers which could also jeopardize the original degree of brightness.

One way of giving the original brightness to the steel wire is by applying an intermediate metallic coating such as a copper coating, a copper alloy coating such as bronze or brass, a zinc coating, a zinc alloy coating such as a 95% zinc 5% aluminum alloy, a nickel coating, a nickel alloy coating, a tin coating, or a tin alloy coating.

Another way of giving the original brightness to the steel wire is by applying an intermediate coating such as a copper-tin sulfate coating or a copper-sulfate coating.

The degree of brightness of the steel wire can be quantified on the bright intermediate coating of the steel wire, either before coating with the transparent polymer, or after removal of the transparent polymer. This quantification has the advantage of being independent of the color of the polymer and of the thickness of the polymer. The degree of brightness of the steel wire can also be quantified on the final steel wire, i.e. coated with the transparent polymer, but may have the disadvantage of being dependent upon the color of the polymer, if any, and upon the thickness of the polymer.
The quantification can be done either by determining the peripheral roughness of the steel wire or by determining the so-called L-value of the steel wire.

According to a second aspect of the present invention, there is provided a method of manufacturing a steel wire having a bright looking colored surface. The method comprises the following steps :
(a) providing a steel wire ;
(b) coating the steel wire with an intermediate coating layer ;
(c) giving a degree of brightness to the intermediate coating ;
(d) using a transparent thermoplastic polyester;
(e) further coating said bright steel wire with said thermoplastic polyester immediately upon said intermediate coating layer.

The coating of the steel wire with the intermediate coating layer can be done by means of a hot dip operation, or by means of an electrolytic coating process.

A required degree of brightness can be given to the intermediate coating layer by wet drawing the intermediately coated steel wire in a suitable lubricant.
However, wet drawing is not necessary to obtain the required degree of brightness. This required degree of brightness can also be obtained on the steel wire on its final diameter by suitably cooling the wire immediately after it leaves the bath in a hot dip galvanizing operation, or by electroplating the steel wire.

The further coating with a transparent polymer can be done by means of an extrusion process.

The invention is particularly applicable to steel wires which are subjected to high mechanical deformations.
For low carbon steel wire, which is steel wire with a carbon content below 0.20 %, following types of wires are subjected to high mechanical deformations : bookbinding wire, box stapling wire, weaving wire, mattress wire, paper clip wire, coat hanger wire, bucket wire, tie wire, lamp shade wire, decoration wire, braiding wire, stitching wire ...
A typical diameter range for bookbinding wire is from 0.60 mm to 1.80 mm.
For high carbon steel wire, which is steel wire with a carbon content above 0.25 %, a spoke wire may be subjected to high mechanical deformation. A spoke wire coated according to the invention may be particularly advantageous with respect to security.

### Brief description of the drawings.

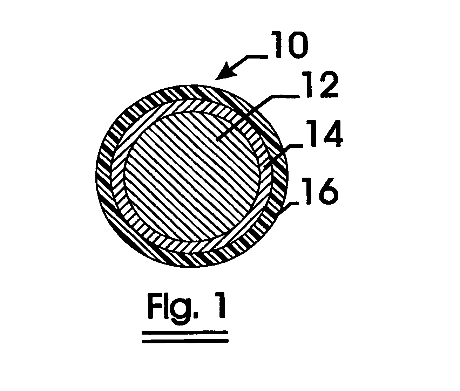

The invention will now be described into more detail with reference to the accompanying drawing being
- FIGURE 1, which shows a transversal cross-section of a steel wire according to the invention.

### Description of a preferred embodiment of the invention.

FIGURE 1 represents a transversal cross-section of a steel wire 10 according to the invention. The steel wire 10 comprises a steel core 12, a thin coating 14 of wet drawn zinc so that a bright appearance is obtained and an outer coating 16 of transparent polyethylene terephthalate. The coating 16 of polyethylene terephthalate comprises a transparent organic coloring agent which gives to the steel wire 10 a bright and metallic like appearance.

Such a steel wire according to the invention can be manufactured as follows.
Starting material is a low carbon wire rod with a diameter of about 5.5 mm. This wire rod is dry drawn until an intermediate diameter of 3.0 mm. The thus drawn steel wire is subjected to heat treatment and is hot dip galvanized at this intermediate diameter of 3.0 mm. The galvanized steel wire is now wet drawn in a soap solution until a final diameter of 1.2 mm. This wet drawing gives the galvanized steel wire its bright appearance. The drawn steel wire is degreased in order to remove all remaining drawing lubricants from the surface of the steel wire. Finally, a transparant polyethylene terephthalate coating with transparent organic coloring agents is applied to the steel wire. The thickness of the polyethylene terephthalate is coating is about 35 micrometer (35 µm).

Conveniently, these thicknesses range from 10 µm to 200 µm, preferably from 25 µm to 50 µm. Typical values are 35 µm for bookbinding wire and 50 µm for spoke wire.

The thus obtained invention steel wire is suitable for use as a bookbinding wire. The polyethylene terephthalate coating adheres well to the steel wire and can withstand the mechanical deformations to which a wires such as a bookbinding wire are normally subjected.

## Claims

1. A coated steel wire (10) having a bright looking surface,
said steel wire (10) having a steel core (12),
said steel core (12) being covered with an intermediate coating layer (14),
and immediately thereupon with a thermoplastic polyester (16),
said polyester being transparent.

2. A steel wire according to claim 1,
wherein said polyester is selected from the group consisting of polyethylene terephthalate, polybutylene terephthalate and polyethylene naphthenate.

3. A steel wire according to claim 2,
wherein said thermoplastic polyester is polyethylene terephthalate.

4. A steel wire according to any one of the preceding claims,
wherein said intermediate coating is a metallic coating such as a copper coating, a copper alloy coating, a zinc coating, a zinc alloy coating, a nickel coating, a nickel alloy, a tin coating or a tin alloy coating.

5. A steel wire according to any one of claims 1 to 3,
wherein said intermediate coating is a coating such as a copper-tin sulfate coating or a copper-sulfate coating.

6. A method of manufacturing a coated steel wire (10) having a bright looking colored surface, said method comprising the following steps :
(a) providing a steel core (12) ;
(b) coating said steel core (12) with an intermediate coating layer (14) ;
(c) giving a degree of brightness to said intermediate coating (14) ;
(d) using a transparent thermoplastic polyester (16) ;
(e) further coating said bright steel wire with said thermoplastic polyester (16) immediately upon said intermediate coating layer (14).

7. A method according to claim 6,
wherein said coating with said intermediate coating layer is done by means of a hot dip operation.

8. A method according to any one of claims 6 to 7,
wherein said giving of a degree of brightness to said intermediate coating is done by wet drawing the coated steel wire.

9. A method according to any one of claims 6 to 7,
wherein said further coating with a polymer is done by an extrusion process.

## Patentansprüche

1. Beschichteter Stahldraht (10) mit einer glänzenden Oberfläche, wobei der Stahldraht (10) einen Stahlkern (12) aufweist, wobei der Stahlkern (12) mit einer Zwischenbeschichtungsschicht (14) und unmittelbar darauf mit thermoplastischem Polyester (16) überzogen ist, wobei der Polyester transparent ist.

2. Stahldraht gemäß Anspruch 1, wobei der Polyester aus der Gruppe ausgewählt ist, die Polyethylenterephthalat, Polybutylenterephthalat und Polyethylennaphtenat umfasst.

3. Stahldraht gemäß Anspruch 2, wobei der thermoplastische Polyester Polyethylenterephthalat ist.

4. Stahldraht gemäß einem der vorangehenden Ansprüche, wobei die Zwischenbeschichtung eine metallische Beschichtung wie eine Kupferbeschichtung, eine Kupferlegierungsbeschichtung, eine Zinkbeschichtung, eine Zinklegierungsbeschichtung, eine Nickelbeschichtung, eine Nickellegierungsbeschichtung, eine Zinnbeschichtung oder eine Zinnlegierungsbeschichtung ist.

5. Stahldraht gemäß einem der Ansprüche 1 bis 3, wobei die Zwischenbeschichtung eine Beschichtung wie eine Kupfer-Zinn-Sulfatbeschichtung oder eine Kupfer-Sulfatbeschichtung ist.

6. Verfahren zur Herstellung eines beschichteten Stahldrahtes (10), der eine glänzende eingefärbte Oberfläche aufweist, wobei das Verfahren die folgenden Schritte umfasst:
(a) Bereitstellen eines Stahlkerns (12);
(b) Beschichten des Stahlkerns (12) mit einer Zwischenbeschichtungsschicht (14);
(c) Versehen der Zwischenbeschichtung (14) mit einem Grad an Glanz;
(d) Verwenden eines transparenten und thermoplastischen Polyesters (16);
(e) weiteres Beschichten des glänzenden Stahldrahtes mit dem thermoplastischen Polyester (16) unmittelbar auf die Zwischenbeschichtungsschicht (14).

7. Verfahren gemäß Anspruch 6, wobei das Beschichten mit der Zwischenbeschichtungsschicht mittels eines Schmelztauchvorgangs ausgeführt wird.

8. Verfahren gemäß einem der Ansprüche 6 oder 7, wobei das Versehen der Zwischenbeschichtung mit einem Grad an Glanz durch Nassziehen des beschichteten Stahldrahtes ausgeführt wird.

9. Verfahren gemäß einem der Ansprüche 6 oder 7, wobei eine weitere Beschichtung mit einem Polymer durch ein Extrusionsverfahren ausgeführt wird.

## Revendications

1. Fil d'acier revêtu (10) présentant une surface d'aspect poli, ledit fil d'acier (10) comprenant une âme en acier (12), ladite âme en acier (12) étant revêtue d'une couche de revêtement intermédiaire (14), et immédiatement sur celle-ci d'un polyester thermoplastique (16), ledit polyester étant transparent.

2. Fil d'acier suivant la revendication 1, dans lequel ledit polyester est sélectionné parmi le groupe composé du polyéthylène téréphtalate, du polybutylène téréphtalate et du polyéthylène naphténate.

3. Fil d'acier suivant la revendication 2, dans lequel ledit polyester thermoplastique est du polyéthylène téréphtalate.

4. Fil d'acier suivant l'une quelconque des revendications précédentes, dans lequel ledit revêtement intermédiaire est un revêtement métallique tel qu'un revêtement de cuivre, un revêtement d'alliage de cuivre, un revêtement de zinc, un revêtement d'alliage de zinc, un revêtement de nickel, un revêtement d'alliage de nickel, un revêtement d'étain ou un revêtement d'alliage d'étain.

5. Fil d'acier suivant l'une quelconque des revendications 1 à 3, dans lequel ledit revêtement intermédiaire est un revêtement tel qu'un revêtement de sulfate de cuivre-étain ou un revêtement de sulfate de cuivre.

6. Procédé de fabrication d'un fil d'acier revêtu (10) présentant une surface colorée d'aspect poli, ledit procédé comprenant les étapes consistant à:
(a) fournir une âme en acier (12);
(b) revêtir ladite âme en acier (12) avec une couche de revêtement intermédiaire (14);
(c) conférer un certain degré de poli à ladite couche de revêtement intermédiaire (14);
(d) utiliser un polyester thermoplastique transparent (16);
(e) procéder à un revêtement supplémentaire dudit fil d'acier poli avec ledit polyester thermoplastique (16) immédiatement sur ladite couche de revêtement intermédiaire (14).

7. Procédé suivant la revendication 6, dans lequel ledit revêtement avec la couche de revêtement intermédiaire est effectué au moyen d'une opération d'immersion à chaud.

8. Procédé suivant l'une quelconque des revendications 6 ou 7, dans lequel ladite étape consistant à conférer un certain degré de poli à ladite couche de revêtement intermédiaire est effectuée par un tréfilage par voie humide du fil d'acier revêtu.

9. Procédé suivant l'une quelconque des revendications 6 ou 7, dans lequel ledit revêtement supplémentaire avec un polymère est effectué à l'aide d'un procédé d'extrusion.
